## Europäisches Patentamt

## European Patent Office

## Office européen des brevets

(19)

(11) Numéro de publication: **0 184 493**
**B1**

(12)

# FASCICULE DE BREVET EUROPÉEN

(45) Date de publication du fascicule du brevet:
27.12.89

(51) Int. Cl.⁴: **H 02 M 3/335**

(21) Numéro de dépôt: **85402241.5**

(22) Date de dépôt: **19.11.85**

(54) Convertisseur continu-continu à commutateur de découpage et transformateur.

<table>
<tr><td>

(30) Priorité: **23.11.84 FR 8417930**

(43) Date de publication de la demande:
**11.06.86 Bulletin 86/24**

(45) Mention de la délivrance du brevet:
**27.12.89 Bulletin 89/52**

(84) Etats contractants désignés:
**BE DE GB NL SE**

(56) Documents cité:
**US-A-3 443 195**
**US-A-4 184 197**
**US-A-4 245 285**

**Le dossier contient des informations techniques présentées postérieurement au dépôt de la demande et ne figurant pas dans le présent fascicule.**

</td><td>

(73) Titulaire: **AUXILEC, 188, rue d'Estienne d'Orves, F-92700 Colombes (FR)**

(72) Inventeur: **Geray, Jacques, Thomson- CSF SCPI 173, bld Hausmann, F-75379 Paris Cedex 08 (FR)**
Inventeur: **Monroy, Gérard, Thomson- CSF SCPI 173, bld Hausmann, F-75379 Paris Cedex 08 (FR)**

(74) Mandataire: **Grynwald, Albert, THOMSON- CSF SCPI, F-92045 PARIS LA DEFENSE CEDEX 67 (FR)**

</td></tr>
</table>

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un convertisseur continu-continu notamment du type élévateur de tension.

Pour élever ou abaisser une tension continue, on prévoit habituellement: un unique commutateur de découpage pour transformer cette tension continue en une tension périodique, un transformateur qui élève ou abaisse la tension ainsi découpée et qui isole la sortie par rapport à l'entrée, ainsi qu'un redresseur pour convertir en tension continue la tension périodique fournie par le secondaire du transformateur. En outre ces convertisseurs comportent généralement un filtre d'entrée, par exemple du type LC, pour éviter la réinjection du courant découpé vers la source d'alimentation ainsi qu'un filtre de sortie, par exemple également du type LC, pour lisser le courant redressé.

Dans des convertisseurs de ce type connus jusqu'à présent, le commutateur est en série avec l'enroulement primaire du transformateur et aux bornes de cet ensemble en série est disposé en parallèle un condensateur qui reçoit la tension continue d'entrée. Dans un montage appelé "direct", ou "forward", l'enroulement secondaire du transformateur est de même sens que l'enroulement primaire et l'énergie n'est transmise dans le circuit secondaire que lors des phases de conduction du commutateur. Dans un convertisseur dit à "récupération", ou "restitution", ou "flyback", l'enroulement secondaire du transformateur est en sens contraire de l'enroulement primaire et le circuit secondaire ne produit de l'énergie que lors des phases de blocage du commutateur.

L'enroulement secondaire du transformateur de ces montages comporte un grand nombre de spires car, l'énergie n'étant transmise au circuit secondaire que pendant une fraction de la période du signal de découpage, la tension aux bornes de ce secondaire doit être plus élevée que la tension de sortie. En outre, du fait de leur nombre élevé, les spires sont enroulées suivant plusieurs couches qui présentent entre elles des capacités parasites entraînant des pertes d'énergie qui sont fonction du carré de la tension. Ainsi il est très difficile de réaliser un convertisseur ayant un bon rendement à tension élevée de sortie, par exemple de l'ordre du kilovolt.

On a déjà aussi proposé (brevet US-4 184 197) un convertisseur continu-continu dans lequel le signal d'entrée est appliqué aux bornes d'un ensemble en série formé par l'enroulement primaire du transformateur et par un condensateur, le commutateur de découpage étant en parallèle sur cet ensemble en série. Le circuit de sortie de ce convertisseur présente une inductance soumise à une différence de potentiel importante et dont le dimensionnement doit être proportionné à cette différence de potentiel, ainsi qu'un condensateur parcouru par un courant efficace important.

L'invention remédie à ces inconvénients.

Elle est caractérisée en ce que:

le moyen redresseur comporte un pont permettant de redresser un courant, fourni par l'enroulement secondaire du transformateur, circulant dans un sens pendant une phase de conduction du commutateur et dans un autre sens pendant l'autre phase de conduction, ce pont redresseur présente un condensateur de restitution qui n'est chargé que par le courant fourni par l'enroulement secondaire qu'au début de la période de blocage du commutateur et qui ne se décharge qu'au cours d'une seconde phase de la période de blocage du commutateur, et le convertisseur comprend en outre un filtre de sortie avec une inductance entre, d'une part, une borne de sortie du pont redresseur, et, d'autre part, une première borne de sortie du convertisseur, et un condensateur entre cette première borne de sortie et la seconde borne de sortie.

Avec un tel montage l'inductance du filtre de sortie peut être de dimensionnement réduit et le condensateur de restitution est parcouru par un courant de faible intensité, sa durée de vie étant donc importante.

D'autres caractéristiques et avantages de l'invention apparaîtront avec la description de certains de ses modes de réalisation, celle-ci étant effectuée en se référant aux dessins ci-annexés sur lesquels:

- la figure 1 est un schéma de convertisseur selon l'invention,
- la figure 2 montre les tensions et courants dans le circuit de la figure 1 lorsque le commutateur est conducteur, et
- la figure 3 montre également les tensions et les courants dans le circuit de la figure 1 mais lorsque le commutateur n'est pas conducteur.

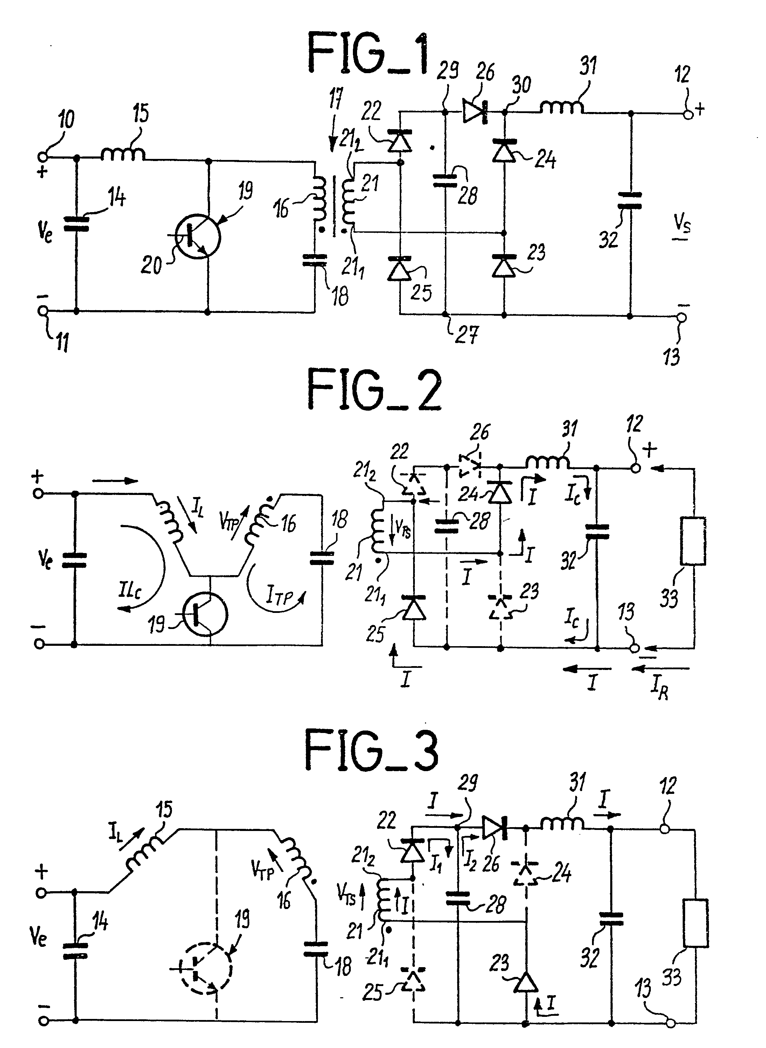

Le convertisseur représenté sur la figure 1 est destiné à convertir une tension continue $V_e$ appliquée entre deux bornes d'entrée 10 (positive) et 11 (négative), en une tension continue de sortie $V_s$, apparaissant entre deux bornes de sortie 12 (positive) et 13 (négative), et de valeur plus élevée que la tension d'entrée $V_e$.

La tension continue d'entrée est filtrée par un montage LC à condensateur 14, de capacité $C_1$, disposé entre les bornes 10 et 11 et à inductance 15, de valeur $L_e$, dont une borne est connectée à la borne (+) 10 et dont l'autre borne est reliée à une borne de l'enroulement primaire 16 d'un transformateur 17. La seconde borne de l'enroulement 16 est reliée à la borne d'entrée négative 11 par l'intermédiaire d'un condensateur 18 de capacité $C_2$. En parallèle sur l'ensemble en série formé par l'enroulement 16 et le condensateur 18 est disposé un commutateur 19 formé par un transistor de puissance de type NPN dont la base 20 reçoit des signaux de commande de découpage qui sont fournis par un générateur non représenté.

L'enroulement secondaire 21 du transformateur 17 est de même sens que l'enroulement primaire 16. Il est connecté à un pont redresseur formé de cinq diodes 22, 23, 24, 25 et 26.

Une borne $21_1$ du secondaire 21 est connectée à la cathode de la diode 23 et à l'anode de la diode 24. L'autre borne $21_2$ du secondaire 21 est reliée à l'anode de la diode 22 et à la cathode de la diode 25. Les anodes des diodes 23 et 25 sont reliées à une borne commune 27 qui est connectée, par l'intermédiaire d'un condensateur 28, appelé condensateur de restitution et de capacité $C_3$, à une borne 29 commune à la cathode de la diode 22 et à l'anode de la diode 26. Les cathodes des diodes 24 et 26 sont reliées à un point commun 30 qui est connecté à la borne de sortie positive 12 par l'intermédiaire d'une inductance 31 de valeur $L_S$ faisant partie d'un filtre LC de sortie qui comporte également un condensateur 32 de capacité $C_4$ en parallèle sur les bornes 12 et 13.

Enfin le point de jonction 27 des anodes des diode 23 et 25 est relié également à la borne de sortie négative 13.

On va maintenant décrire à l'aide des figures 2 et 3 le fonctionnement du convertisseur représenté sur la figure 1 dans les conditions suivantes: le régime permanent a été atteint, le générateur relié à la base 20 du transistor 19 fournit des signaux tels que les temps de blocage et de conduction de ce transistor sont pratiquement égaux, et la charge 33 connectée entre les bornes 12 et 13 est constituée par une résistance dans laquelle circule un courant d'intensité I.

Avec ces hypothèses on peut montrer que la tension moyenne aux bornes du condensateur 18 est égale à la tension d'entrée $V_e$.

On se réfère tout d'abord à la figure 2 qui correspond à la saturation du transistor 19. Dans ce cas il circule un courant d'intensité $I_{TP}$ dans le primaire 16 du transformateur 17 qui provient de la décharge du condensateur 18. Ce courant d'intensité variable provoque l'apparition d'une tension $V_{TS}$ aux bornes de l'enroulement secondaire 21 et le passage d'un courant I dans cet enroulement de même sens que la tension $V_{TS}$, cet enroulement étant générateur d'énergie. Dans ces conditions, le trajet du courant I est, en partant de la borne $21_1$: la diode 24, puis l'inductance 31; de là il se sépare en deux pour passer dans le condensateur 32 avec une intensité $I_C$ et dans la charge 33 avec une intensité $I_R$. Ce courant revient ensuite à la borne $21_2$ en passant par la diode 25.

Les diodes 22, 23 et 26 ainsi que le condensateur 28 ont été représentées en traits interrompus pour montrer que ces éléments ne sont, dans cette phase, pas parcourus par un courant.

On se réfère maintenant à la figure 3 qui correspond à l'état de blocage du transistor 19.

Dans cette condition la tension $V_{TP}$ aux bornes de l'enroulement primaire 16 s'inverse et le courant $I_L$ qui traverse cet enroulement change de sens. Ce courant provient de l'inductance 15 qui restitue l'énergie qu'elle avait accumulée lors de la phase de saturation du transistor 19. Dans cet état le condensateur 18 se charge.

La tension $V_{TS}$ aux bornes de l'enroulement secondaire 21 change également de sens; il en est de même pour le courant I dans cet enroulement secondaire 21. La valeur de la tension $V_{TS}$ augmente rapidement en raison de la croissance rapide de la tension $V_{TP}$ au primaire 16. Lorsque cette tension $V_{TS}$ atteint la tension aux bornes du condensateur chargé 28, le courant I s'écoule comme représenté sur la figure 3, c'est-à-dire qu'en partant de la borne $21_2$, il passe à travers la diode 22 et, au point de jonction 29, il se répartit en deux courants dont l'un $I_1$ traverse le condensateur 28 et l'autre $I_2$ passe par la diode 26. Le courant $I_1$ traversant le condensateur 28 passe ensuite par la diode 23 pour revenir à la borne $21_1$. Le courant $I_2$, après avoir traversé la diode 26, passe par l'inductance 31, puis par l'ensemble en parallèle du condensateur 32 et de la charge 33 et revient par la diode 23 à la borne $21_1$.

Comme pour la figure 2 les éléments qui dans cette phase ne sont pas parcourus par un courant ont été représentés en traits interrompus; il s'agit des diodes 24 et 25 et du transistor 19.

Le condensateur 28 est parcouru par deux courants $I_1$, $I_2$ en sens contraires. Au début de la phase de blocage du transistor 19 le courant $I_1$ de charge du condensateur 28 l'emporte sur le courant $I_2$ de décharge. Au cours de la deuxième partie de la phase de blocage du transistor 19 le courant produit par l'enroulement 21 a une intensité inférieure à celle du courant dans l'inductance 31, le condensateur 28 se déchargeant; il fournit la différence entre les courants dans l'enroulement 21 et dans l'inductance 31.

Il résulte de ces considérations que le courant circulant dans le condensateur 28 ne représente pas le courant total I mais seulement une fraction, par exemple 20 %, de celui-ci. Il est d'ailleurs à noter que, sur une période de découpage, cette fraction du courant qui passe à travers le condensateur 28 est réduite de moitié soit 10 % dans l'exemple.

Le convertisseur selon l'invention présente de nombreux avantages tant par rapport à un montage du type direct ou forward que par rapport à un montage du type à restitution ou fly-back.

Dans ces montages connus, comme déjà indiqué, le commutateur est en série avec l'enroulement primaire du transformateur et un condensateur est en parallèle sur cet ensemble en série. Dans le montage de type direct l'enroulement secondaire est de même sens que l'enroulement primaire et le redressement est obtenu à l'aide de deux diodes dont les anodes sont connectées à une borne respective du secondaire et dont les cathodes présentent une borne commune reliée à l'inductance du filtre de sortie. Dans le montage du type à restitution l'enroulement secondaire est en sens contraire de l'enroulement primaire et le redressement est obtenu à l'aide d'une seule diode dont l'anode est connectée à une borne du secondaire et dont la cathode est reliée à l'autre borne de ce secondaire par l'intermédiaire d'un condensateur analogue au condensateur 28.

Dans ces deux types de montage, du fait que le commutateur est en série avec l'enroulement primaire du transformateur, ce dernier est utilisé de façon dissymétrique, l'induction du circuit magnétique ayant toujours le même signe. Par contre avec le circuit de l'invention, le transformateur est utilisé de façon symétrique: l'induction prend les deux signes. Ainsi pour un même circuit magnétique et pour les mêmes performances on peut utiliser avec l'invention un transformateur ayant deux fois moins de spires au primaire que dans un montage classique.

Par ailleurs, étant donné que dans les montages classiques l'énergie n'est transmise au secondaire que pendant la moitié du temps, dans ces montages il faudra, pour obtenir la même tension de sortie, prévoir une tension aux bornes du secondaire deux fois plus importante qu'avec le circuit de la figure 1 où l'énergie est transmise au secondaire pendant les deux phases de conduction du transistor 19. Il en résulte que le rapport de transformation est avec l'invention deux fois moins important qu'avec les montages classiques.

En résumé, par rapport aux montages classiques et pour les mêmes performances, le transformateur présentera deux fois moins de spires au primaire et quatre fois moins de spires au secondaire. Par conséquent les pertes d'énergie seront beaucoup moins importantes qu'avec les montages classiques, notamment en haute tension. En effet, les spires étant quatre fois moins nombreuses, les capacités parasites sont en principe quatre fois plus petites et, comme d'une part l'énergie de charge est proportionnelle à la capacité et proportionnelle au carré de la tension et d'autre part cette tension est deux fois moins élevée, l'énergie de charge des capacités parasites est seize fois plus petite.

Dans un montage du type direct, la tension aux bornes de l'inductance du filtre de sortie est égale à la tension de sortie $V_s$ alors qu'avec le montage de l'invention la tension aux bornes de l'inductance 31 est nulle. On a constaté que pour une même qualité de filtrage, l'inductance 31 du montage de la figure 1 peut être dix fois moins importante que l'inductance correspondante d'un montage classique du type direct.

Toutefois dans un montage du type à restitution l'inductance du filtre de sortie est également de faibles dimensions. Mais le condensateur du circuit de redressement est dans le montage à restitution parcouru par un courant efficace important, environ 50 % du courant de sortie, alors qu'avec le convertisseur de l'invention le condensateur 28 du circuit de redressement n'est parcouru que par environ 10 % du courant total. Il en résulte que le condensateur 28 est soumis à moins de contraintes que le condensateur du circuit de redressement du montage à restitution et qu'ainsi sa durée de vie est plus importante.

Bien entendu il n'est pas obligatoire que le commutateur 19 soit constitué par un transistor. Il suffit, de façon générale, qu'il constitue un interrupteur commandable.

Enfin l'invention s'applique aussi quand le transformateur 17 n'est pas du type élévateur. Elle présente un intérêt quand la tension de sortie est élevée, même si le transformateur est du type 1/1 ou même abaisseur.

## Revendications

1. Convertisseur continu-continu, par exemple du type élévateur de tension, comportant un unique commutateur (19) commandé pour découper le signal d'entrée, un seul transformateur (17) dont l'enroulement primaire (16) reçoit le signal découpé et un moyen redresseur du signal fourni par l'enroulement secondaire (21) du transformateur, le signal d'entrée étant appliqué aux bornes de l'ensemble en série formé par l'enroulement primaire (16) du transformateur (17) et par un condensateur (18), le commutateur de découpage (19) étant en parallèle sur cet ensemble en série, caractérisé en ce que:
le moyen redresseur comporte un pont permettant de redresser un courant, fourni par l'enroulement secondaire (21) du transformateur, circulant dans un sens pendant une phase de conduction du commutateur et dans un autre sens pendant l'autre phase de conduction, ce pont redresseur présente un condensateur de restitution (28) qui n'est chargé par le courant fourni par l'enroulement secondaire (21) qu'au début de la période de blocage du commutateur (19) et qui ne se décharge qu'au cours d'une seconde phase de la période de blocage du commutateur, et le convertisseur comprend en outre un filtre de sortie avec:
une inductance (31) entre, d'une part, une borne de sortie (30) du pont redresseur et, d'autre part, une première borne de sortie (12) du convertisseur, et un condensateur (32) entre cette première borne de sortie (12) et la seconde borne de sortie (13).

2. Convertisseur selon la revendication 1, caractérisé en ce que les enroulement primaire (16) et secondaire (21) du transformateur (17) sont de même sens.

3. Convertisseur selon la revendication 1 ou 2, caractérisé en ce que le pont redresseur comporte une première diode (22) dont l'anode est raccordée à une première borne ($21_2$) de l'enroulement secondaire (21), une seconde diode (23) dont la cathode est reliée à la seconde borne ($21_1$) de l'enroulement secondaire (21), une troisième diode (24) dont l'anode est connectée à la seconde borne ($21_1$) du secondaire (21), une quatrième diode (25) dont la cathode est connectée à la première borne ($21_2$) du secondaire (21) et dont l'anode est reliée à l'anode de la seconde diode (23) ainsi que, par l'intermédiaire du condensateur (28) de restitution, à la cathode de la première diode (22) et à l'anode d'une cinquième diode (26) dont la cathode est reliée à celle de la troisième diode (24), le point commun (30) à ces dernières cathodes constituant une borne de sortie du pont, la seconde borne de sortie étant le point commun (27) aux anodes des seconde et quatrième diodes.

4. Convertisseur selon l'une quelconque des revendications précédentes, caractérisé en ce qu'il comporte un filtre d'entrée du type LC avec un condensateur (14) entre les bornes d'entrée (10 et 11) et une inductance (15) disposée entre une borne d'entrée (10) et la borne du commutateur (19) qui est opposée à la seconde borne d'entrée (11).

5. Convertisseur selon l'une quelconque des revendications précédentes, caractérisé en ce que le commutateur de découpage comporte un transistor de puissance.

6. Convertisseur selon l'une quelconque des revendications précédentes, caractérisé en ce que la tension de sortie (Vs) est de l'ordre du kilovolt.

7. Convertisseur selon l'une quelconque des revendications précédentes, caractérisé en ce que 1e transformateur est du type élévateur.


Claims

1. A DC/DC converter, as for example of the voltage increasing type, comprising a single switch (19) operated in order to cut off the input signal, a single transformer (17) whose primary (16) receives the cutoff signal and a rectifying means for the signal supplied by the secondary (21) of the transformer, the input signal being applied to the terminals of the unit formed by the primary (16) of the transformer (17) and by a capacitor (18), the cutoff switch (19) being placed in parallel with this series unit, characterized in that:
the rectifying means comprises a bridge making it possible to rectify a current supplied by the secondary (21) of the transformer and flowing in one direction during a conducting phase of the switch and in another direction during the other phase of conduction, this rectifying bridge comprises a restoring capacitor (28) which is only charged by the current supplied by the secondary (21) at the start of the cutoff period of the switch (19) and which only discharges during the course of a second phase of the cutoff period of the switch, and the converter furthermore comprises an output filter with:
an inductance (31) between, on the one hand, one output terminal (30) of the rectifying bridge and, on the other hand, a first output terminal (12) of the converter, and a capacitor (32) placed between this first output terminal (12) and the second output terminal (13).

2. The converter as claimed in claim 1, characterized in that the primary (16) and the secondary (21) of the transformer (17) are in the same direction.

3. The converter as claimed in claim 1 or in claim 2, characterized in that the rectifying bridge comprises a first diode (22) whose anode is connected with a first terminal (21$_2$) of the secondary (21), a second diode (23) whose cathode is connected with the second terminal (21) of the secondary (21), a third diode (24) whose anode is connected with the second terminal (21$_1$) of the secondary (21), a fourth diode (25) whose cathode is connected with the first terminal (21$_2$) of the secondary (21) and whose anode is connected with the anode of the second diode (23) and, by the intermediary of the restoring capacitor (28), the cathode of the first diode (22) and the anode of a fifth diode (26) whose cathode is connected with that of the third diode (24), the common point (30) on these two cathodes constituting a bridge output terminal, the second output termial being the common point (27) of the two anodes of the second and fourth diodes.

4. The converter as claimed in any one of the preceding claims, characterized in that it comprises an input filter of the LC type with a capacitor (14) between the input terminals (10 and 11) and an inductance (15) placed between one input terminal (10) and the terminal of the switch (19) which is opposite to the second input terminal (11).

5. The converter as claimed in any one of the preceding claims, characterized in that the cutoff switch comprises a power transistor.

6. The converter as claimed in any one of the preceding claims, characterized in that the output voltage (Vs) is in the kilovolt range.

7. The converter as claimed in any one of the preceding claims, characterized in that the transformer is a step-up transformer.


Patentansprüche

1. Gleichstrom/Gleichstrom-Wandler, zum Beispiel vom spannungserhöhenden Typ, mit einem einzigen, zur Zerhackung des Eingangssignals gesteuerten Schalter (19), einem einzigen Transformator (17), dessen Primärwicklung (16) das zerhackte Signal empfängt, und einem Mittel zum Gleichrichten des von der Sekundärwicklung (21) des Transformators abgegebenen Signals, wobei das Eingangssignal an die Klemmen der von der Primärwicklung (16) des Transformators (17) und von einem Kondensator (18) gebildeten Serienschaltung abgegeben wird und der Zerhackschalter (19) parallel auf diese Serienschaltung montiert ist, dadurch gekennzeichnet, daß:
das Mittel zum Gleichrichten eine Brücke umfaßt, die gestattet, einen Strom gleichzurichten, der von der Sekundärwicklung (21) des Transformators abgegeben wird und während einer Leitungsphase des Schalters in eine Richtung fließt, und während der anderen Leitungsphase in eine andere Richtung,

diese Gleichrichterbrücke einen Rückgewinnungskondensator (28) aufweist, der von dem von der Sekundärwicklung (21) abgegebenen Strom nur am Anfang der Sperrperiode des Schalters (19) aufgeladen wird und sich nur während einer zweiten Phase der Sperrzeit des Schalters entlädt, und der Wandler außerdem ein Ausgangsfilter enthält, mit:

einer Induktivität (31) zwischen einerseits einer Ausgangklemme (30) der Gleichrichterbrücke, und andererseits einer ersten Ausgangsklemme (12) des Wandlers, und einem Kondensator (32) zwischen dieser ersten Ausgangsklemme (12) und der zweiten Ausgangsklemme (13).

2. Wandler nach Anspruch 1, dadurch gekennzeichnet, daß die Primärwicklung (16) und Sekundärwicklung (21) des Transformators (17) denselben Wicklungssinn haben.

3. Wandler nach Anspruch 1 oder 2, dadurch gekennzeichnet, daß die Gleichrichterbrücke eine erste Diode (22) umfaßt, deren Anode an eine erste Klemme (21₂) der Sekundärwicklung (21) angeschlossen ist, eine zweite Diode (23), deren Kathode mit der zweiten Klemme (21₁) der Sekundärwicklung (21) verbunden ist, eine dritte Diode (24), deren Anode an die zweite Klemme (21₁) der Sekundärwicklung (21) angeschlossen ist, eine vierte Diode (25), deren Kathode an die erste Klemme (21₂) der Sekundärwicklung (21) angeschlossen ist und deren Anode mit der Anode der zweiten Diode (23) verbunden ist, sowie, über den Rückgewinnungskondensator (28), mit der Kathode der ersten Diode (22) und mit der Anode einer fünften Diode (26), deren Kathode mit derjenigen der dritten Diode (24) verbunden ist, wobei der diesen letzteren Kathoden gemeinsame Punkt (30) eine Ausgangsklemme der Brücke bildet und die zweite Ausgangsklemme der den Anoden der zweiten und vierten Diode gemeinsame Punkt (27) ist.

4. Wandler nach einem der vorausgehenden Ansprüche, dadurch gekennzeichnet, daß er ein Eingangsfilter des Typs LC umfaßt, mit einem Kondensator (14) zwischen den Eingangsklemmen (10 und 11) und einer Induktivität (15), die zwischen einer Eingangsklemme (10) und der Klemme des Schalters (19) angeordnet ist, die der zweiten Eingangsklemme (11) gegenüberliegt.

5. Wandler nach einem der vorausgehenden Ansprüche, dadurch gekennzeichnet, daß der Zerhackschalter einen Leistungstransistor umfaßt.

6. Wandler nach einem der vorausgehenden Ansprüche, dadurch gekennzeichnet, daß die Ausgangsspannung (Vs) in der Größe eines Kilovolt ist.

7. Wandler nach einem der vorausgehenden Ansprüche, dadurch gekennzeichnet, daß der Transformator vom spannungserhöhenden Typ ist.

# FIG_1

# FIG_2

# FIG_3